# EUROPÄISCHE PATENTSCHRIFT

(11) **EP 0 314 160 B1**
(45) Veröffentlichungstag und Bekanntmachung des Hinweises auf die Patenterteilung: **14.04.1993**
(21) Anmeldenummer: 88117997.2
(22) Anmeldetag: 28.10.1988
(51) Int. Cl.: B29C 39/34, B29C 33/50, B29C 33/30

(54) **Giesswerkzeug zur Herstellung von Kunststoffguss**
Casting apparatus for producing cast plastics
Appareil de coulage pour fabriquer des objets coulés en matière plastique

(30) Priorität: 30.10.1987 HU 488687
(43) Veröffentlichungstag der Anmeldung: 03.05.1989
(73) Patentinhaber: FURUKAWA ELECTRIC Technologiai Intézet Kft., H-1158 Budapest (HU)
(72) Erfinder: Zelenyánszki, Endre, Dr., H-1025 Budapest (HU); Csecsödi, Sándor, Dipl.-Ing., H-1112 Budapest (HU); Szaplonczay, Pál, H-1124 Budapest (HU); Bognár, Alajos, Dipl.-Ing., H-1158 Budapest (HU); Téglás, Márton, Dipl.-Ing., H-1061 Budapest (HU)
(74) Vertreter: Füchsle, Klaus, Dipl.-Ing.

(56) Entgegenhaltungen:
- DE-A- 1 629 668
- DE-A- 1 778 305
- DE-A- 2 300 128
- FR-A- 2 231 492

## Beschreibung

Die Erfindung betrifft ein Giesswerkzeug zur Herstellung von Kunststoffgussteilen und genauer ein Giesswerkzeug, das aus in Reihe angeordneten formgebenden Elementen zusammengebaut ist. Die zumindest teilweise aus Kunststoff bestehenden formgebenden Elemente sind mit aneinander anschließenden Flächen versehen. Die Reihe der formgebenden Elemente bildet einen einzigen geschlossenen Hohlraum und ist an mindestens einem ihrer Enden mit einem den inneren Hohlraum abschließenden Verschlußelement versehen. Zu dem inneren Hohlraum ist auf der Seite des Giesswerkzeuges ein Anschlußstutzen für die Zuführung des Gußmaterials ausgebildet und auf der gegenüberliegenden Seite ist eine Öffnung ausgebildet. Ein derartiges Giesswerkzeug ist aus der DE-A-2 300 128 bekannt.

Die zum Giessen von Kunststoffformen dienenden Industriewerkzeuge werden aus starrem Material, mindestens aus Metall, durch kostspielige Verfahren hergestellt. Besonders teuer sind die Werkzeuge für Gusse, die stark gegliederte Flächen haben, die oft an mehreren Stellen auch verteilt sind, und aus mosaikartig aneinanderpassenden formgebenden Elementen bestehen, einerseits wegen der Zerlegbarkeit, andererseits wegen der lokalen Vetilationsmöglichkeit. Diese zwei Forderungen stehen mit der dritten Forderung, einen gratlosen Guß herzustellen, im Widerspruch. Es kommt oft vor, daß der einreißende Grat die betriebsartig nicht getrennten, zur Ventilation dienenden Spalte verstopft, und demzufolge ein Guß mit Luftblasen oder Einschlüssen entsteht.

Eine weitentwickelte Ausführung der Giesswerkzeuge für Kunststoffe ist in der Anmeldung Nr. 28933-86 beschrieben, die ein Verfahren und eine Einrichtung beschreibt. Aus der Beschreibung ist zu lesen, daß zum Gießen von Hochspannungsisolatoren aus Kompositkunststoff ein axial verteiltes Stahlwerkzeug verwendet wird. Da die Masse und die Fläche des formgebenden Hohlraums bei diesem Werkzeug groß sind, ist es unvermeidlich, eine Schließ- und Öffnungsvorrichtung zu verwenden.

Solche kostspieligen Werkzeuge sind nur bei Serienprodukten wirtschaftlich.

Die Nachteile der bekannten aus starrem Material hergestellten Giesswerkzeuge sind die folgenden:
- einstückig gegossene Kunststoffformen mit untergeschnittenem Schirmsystem können nicht hergestellt werden;
- ein auf dem inneren Mantel eines Rohrens angeordnetes und damit einstückig gegossenes Kunststoffschirmsystem kann auch nicht hergestellt werden;
- zur Herstellung von mit stark gegliederten Flächen gebildeten Kunststoffgusse, deren Form nicht zylindersymmetrisch ist, kann man nur sehr teuere Werkzeuge verwenden.

Außer den obenerwähnten, aus starrem Material hergestellten Werkzeuge, sind auch Giesswerkzeuge für Kunststoffe aus elastischem Material bekannt. Auf dem Gebiet der Archäologie, des Denkmalschutzes oder Modellbildung sind seit langer Zeit Werkzeuge aus Silikongummi bekannt, wo verschiedene Reliefs oder Statuenteile in Silikonkautschuk eingebettet und dann gegossen sind. Ein solches Verfahren ist von der Firma Wacker-Chemie GmbH unter dem Titel "Elastische Formen aus RTV-2 Silikonkautschuk für Industrie", oder in der Ausgabe der Firma Rhone Poulenc Specialités Chimiques "Reproduction with a flexible silicone Mould" beschrieben. Diese Veröffentlichungen schreiben aber nichts von Werkzeugen, die aus in Reihe geschalteten formgebenden Elementen bestehen. Die bekannten Abzugsfertigungsverfahren können aber in der Industrie wegen der begrenzten Genauigkeit der Gummiwerkzeuge und wegen der komplizierten Werkzeugherstellung und wegen der Schwierigkeiten der Anpassung und Formung der Verteilungsfläche, die zur Öffnung unerläßlich sind, nicht angewandt werden. Ein Modell, dessen Größe bei großen Produkten mit dem Original gleich sein soll, zu erzeugen, macht auch an sich Probleme bzw. hat irreal große Kosten.

Aus der DE-A-1 778 305 ist ferner eine Gießvorrichtung bekannt, deren Formschalen aneinander gepießt sind.

Die Erfindung hat daher die Aufgabe, daß in der Einleitung beschriebene Werkzeug wirtschaftlicher zu machen und die erwähnten Nachteile zu beseitigen.

Die Aufgabe wird gem Anspruch 1 erfindungsgemäß derart gelöst, daß die elastischen formgebenden Elemente mit von außen umgebenden Stützelementen bzw Abstandshaltern versehen sind, wobei die die einzelnen formgebenden Elemente umgebenden Stützelemente mit aneinander angepaßten Anschlußteilen versehen sind.

Der Vorteil des derart hergestellten Giesswerkzeuges liegt darin, daß es aus billigen, serienmäßig hergestellten Elementen mit einheitlichen Massen aufgebaut ist, des weiteren die Spalte zwischen der sich zueinanderschaltenden Flächen der formgebenden Elemente als Ventile arbeiten und wirken, die die sich komprimierende Luft durchläßt, das Giessmaterial aber nicht. Dadurch kann sich keine Luftblase und kein Grat bilden. Die Stützelemente aus starrem Material sichern die Positionierung der formgebenden Elemente und die Befestigung der Form des Werkzeughohlraumes.

Eine vorteilhafte Ausführungsform der Erfindung ist derart gebildet, daß das formgebende Element aus einem in sich selbst schließenden Profil besteht, und daß das in sich selbst schließende Profil ringförmig ist.

Der Vorteildieses Gieswerkzeuges liegt darin, daß es keinen Rand hat, wo Dichtungen vorgesehen werden sollten. Wenn das in sich selbst schließende formgebende Element gegebenenfalls geschnitten ist, kann es bei der Schnittflache wieder ohne Spalt angepaßt werden.

Die aufeinander angeordneten formgebenden Elemente bilden einen Werkzeughohlraum mit automatisch geschlossener Mantelfläche.

Eine weitere vorteilhafte Ausführungsform der Erfindung ist derweise ausgebildet, daß das in sich selbst schließende Profil kontinuierlich ist.

Der Vorteil dieser Ausführungsform liegt darin, daß die Fläche des Gusses zur glatten kontinuierlichen Fläche des formgebenden Elementes ähnlich, auch glatt wird. Ein weiterer Vorteil dieser Ausführungsform liegt noch darin, daß mit deren Anwendung ein Gußstück aus Kunststoff mit großer Flächengliederung auf der inneren Mantelfläche eines rohrartigen Trägers gebildet werden kann, die an sonsten mit einem starren Werkzeug unmöglich ist.

Bei einer weiteren vorteilhaften Ausführungsform der Erfindung ist das in sich selbst schließende Profil an mindestens einer Stelle aufgeschnitten.

Der Vorteil dieser Ausführungsform liegt in der leichten Öffnung des Werkzeuges, da nach der Entfernung der Stützelemente die formgebenden Elementeausgehend von der Schnittstelle - ohne besondere Kraft stufenweise von der Kunststoffformfläche abtrennbar sind.

Bei einer weiteren Ausführungsformen der Erfindung ist das in sich selbst schliessende Profil aus einem geraden Profil durch Biegen auf Form ausgebildet.

Der Vorteil dieser Ausführungsform liegt darin, dass das Material des formgebenden Elementes durch eine kontinuierliche Technologie - durch Extrusion - hergestellt werden kann, und aus dem derweise hergestellten geraden Profil mit dessen Zergliederung formgebende Elemente mit verschiedener Form und Masse gefertigt werden können, d.h. die Abmessungen des Kunststoffgusses zwischen weiten Grenzen gewählt werden können.

Bei einer weiteren Ausführungsform der Erfindung ist das elastische formgebende Element aus einem spiralförmig aufgewickelten geraden Profil ausgebildet.

Der Vorteil dieser Ausführungsform liegt darin, dass der Werkzeughohlraum entlang seiner ganzen Länge den gleichen Querschnitt hat, demzufolge strömt das Giessmaterial gleichmässig, und schiebt immer die Luft vor sich her. In diesem Fall bilden sich also keine Luftblasen.

Bei einer weiteren Ausführungsform der Erfindung ist das elastische formgebende Element durch eine Kombination von Segmenten ringförmiger Profile und gerader Profilstücke ausgebildet.

Der Vorteil dieses Giesswerkzeuges liegt darin, dass mit dessen Hilfe ein Kunststoffguss mit Schirmfläche ohne Kontinuitätsfehler auf einer äusseren Mantelfälche eines zylinderartigen Trägers hergestellt werden kann. In dem dünnwandigen formgebenden Profil braucht kein Schnitt ausgebildet zu werden, da es auch ohne Schnitte von dem Guss abtrennbar ist, und dann durch Dehnen und Ziehen entfernt werden kann.

Eine weitere Ausführungsform der Erfindung ist derweise gebildet, dass das in sich selbst schliessende kontinuierliche Profil dünnwandig ist.

Bei einer weiteren Ausführungsform ist das Profil dickwandig. Der Vorteil dieser Ausführungsform liegt darin, dass zu diesem Giesswerkzeug ein Stützelement mit einfacher Form gefertigt werden kann, während das Stützelement bei dem dünnwandigen Profil als Profilfolger gebildet ist.

Bei einer weiteren Ausführungsform der Erfindung ist das dickwandige Profil dicht (massiv). Der Vorteil dieses Giesswerkzeuges liegt darin, dass mit dessen Verwendung auch Gusse mit einem Schirm mit wesentlichem Unterschnitt hergestellt werden können. Die gute Wärmeisolierfähigkeit der formgebenden Elemente kann ausgenutzt werden, die bei Giessmaterialen, die auf die Wirkung der Wärme vernetzt werden günstig sein kann, besonders dann, wenn das Werkzeug auf der dem Stützelement gegeüberliegenden Seite geheizt wird.

Bei einer weiteren Ausführungsform des erfindungsmässigen Werkzeuges ist das dickwandige Profil hohlräumig. Der Vorteil dieses Giesswerkzeuges liegt darin, dass in den Hohlräume heisse Luft eingeführt werden kann, und damit das Werkzeug geheizt werden kann. Zu diesem Zweck sind die Hohlräume an der Seite der Stützelemente geöffnet, und dazu müssen die Stützelemente perforiert werden.

Bei einer weiteren Ausführungsform des erfindungsmässigen Werkzeuges ist der Hohlraum des dickwandigen Profils ein geschlossener Hohlraum. Der Vorteil dieser Ausführungsform leigt darin, dass das formgebende Element die Wärmedilatation des den Werkzeughohlraum füllenden Giessmaterials nach der Vernetzung kompensieren kann, so tritt kein gefährlicher Überdruck auf. Ausser der obenerwähnten ergibt sich bei formgebenden Elementen, die durch Formbiegung von extrudierten Profilelementen mit Hohlräumen hergestellt sind, in dem formgebenden Element einen Positionierungsdorn anzuordnen.

Bei einer weiteren Ausführungsform des erfindungsmässigen Werkzeuges ist der geschlossene Hohlraum mit mindestens einem Rohranschluss an den Aussenraum versehen. Der Vorteil dieses Giesswerkzeuges liegt darin, dass das formgebende Element mit Heiz- und/oder Kühlmedium gefüllt werden kann bzw. von einem solchen Medium durchströmt werden kann.

Bei einer weiteren Ausführungsform besteht das formgebende Element aus einem einzigen Material. Der Vorteil dieser Ausführungsform liegt in ihrer Billigkeit, da die formgebenden Elemente derweise in einem einzigen Herstellungsschritt hergestellt werden können.

Bei einer weiteren Ausführungsform besteht das formgebende Element aus mindestens zwei verschiedenen Materialen. Der Vorteil dieses Giesswerkzeuges liegt darin, dass die Eigenschaften, die mechanische-, elektrische- und Grenzflächencharakteristiken des formgebenden Elementes in weiten Grenzen gewählt werden können, und die Eigenschaften der einzelnen Materialkomponenten miteinander kombiniert werden können. In das formgebende Elemente kann sogar eine Feder aus Stahl eingebaut werden.

Bei einer weiteren Ausführungsform des erfindungsmässigen Werkzeuges weist das formgebende Element einen biegsamen inneren Kern auf. Der Vorteil dieses Giesswerkzeuges liegt darin, dass die elastische Deformationsfähigkeit der formgebenden Elemente kleiner gewählt werden kann als sie ohne den inneren Kern sich ergebe. Die Biegsamkeit kann aber sogar erhöht werden. Bei einer solchen Ausbildung kann das formgebende Element sogar als sich plastisches deformierbares Element gebildet werden.

Bei einer weiteren Ausführungsform der Erfindung, ist auf der Oberfläche des formgebenden Elementes ein beständiger formtrennender Überzug ausgebildet. Der Vorteil dieses Giesswerkzeuges liegt darin, dass die Haftung und die Adhäsion zwischen der formgebenden Oberfläche des Werkzeuges und der Oberfläche der ausgegossenen Kunststoffform vermindert werden kann. Die Abtrennung der formgebenden Elemente erleichtert sich, und vermindert sich die Verletzungsgefahr der gegossenen Schirme mit dünnem Rand.

Bei einer weiteren Ausführungsform besteht das formgebende Element aus einem elektrisch isolierenden Material, wobei das elektrisch isolierende Material mit einem elektrisch leitenden Überzug versehen ist. Der Vorteil dieses Giesswerkzeuges liegt darin, dass es elektrisch geheizt werden kann. Der Strom wird über den elektrisch leitenden Überzug geführt, und demzufolge erwärmt sich die Oberfläche der einzelnen formgebenden Elemente. Den einen Teil der auftretenden Wärmemenge kann das Giessmaterial unmittelbar aufnehmen, womit dessen Vernetzung beschleunigt werden kann.

Gemäss einer weiteren Ausführungsform besteht das formgebende Element aus einem elektrisch leitenden Material, wobei das elektrisch leitende Material mit einem elektrisch isolierenden Überzug versehen ist. Der Vorteil dieses Giesswerkzeuges liegt darin, dass es elektrisch geheizt werden kann, und der Heizstrom der einzelnen formgebenden Elemente kann von einer Stromquelle von kleiner Spannung geführt werden, da der elektrische Widerstand der in ihrem gesamten Querschnitt leitenden formgebenden Elemente für entsprechend klein gewählt werden kann.

Gemäss einer weiteren vorteilhaften Ausführungsform ist in dem Querschnitt des formgebenden Elementes eine Widerstandsheizdrahteinlage angeordnet. Der Vorteil dieses Werkzeuges liegt darin, dass es elektrisch geheizt werden kann, und zwar so, daß das den Hohlraum des Giesswerkzeuges füllende Giessmaterial mit dem Heizelement nicht unmittelbar in Berührung gelangt, da das Heizelement in das formgebende Element, zweckmässig unter dessen Oberfläche, eingebettet ist. Dadurch kann man vermeiden,z.B. die Oberfläche der gegossenen Kunststoffform mit einem leitfähigen Material zu verunreinigen.

Noch eine weitere Ausführungsform der Erfindung ist derart ausgebildet, dass die Gesamtheit der formgebenden Elemente von aussen als Stützelement von einem steifen Gehäuse umgeben ist, oder von innen von einem steifen Gehäuse abgestützt ist. Der Vorteil dieses Giesswerkzeuges liegt darin, dass es liecht ausführbar, und relativ billig herstellbar ist.

Bei einer weiteren Ausführungsform weist das steife Gehäuse einen zylindrischen Querschnitt auf. Der Vorteil dieses Giesswerkzeuges liegt darin, dass es mit einer einfachen Technologie herstellbar ist, desweiteren die Positionierung des Stützelementes bezüglich der weiteren Elemente des Werkzeuges genau einstellbar ist.

Noch eine weitere Ausführungsform ist der art geformt, dass das zylindrischen Querschnitt aufweisende steife Gehäuse aus Ringen gebildet ist. Der Vorteil dieses Giesswerkzeuges liegt darin, dass es einfach montiert werden kann, da die formgebenden Elemente als Stützelementringe an ihre Stellen angeordnet, bzw. von dort entfernt werden können. Ein weiterer Vorteil ist die gesicherte zylindersymmetrische Form der Stützelement-Ringe.

Gemäss einer weiteren Ausführungsform sind die Stützelemente der formgebenden Elemente aus zwei Hälften bestehenden Schellen. Der Vorteil dieses Giesswerkzeuges liegt darin, dass durch Verbindung der formgebenden Elemente mit Schellen, die Gratbildung entlang dem Profilschnitt auch dann verhindert werden kann, wenn das formgebende Element aus einem geraden Profil durch Formbiegung gefertigt wurde.

Bei einer weiteren vorteilhaften Ausführungsform sind die einander angepassten Anschlussteile der Stützelemente Profilnuten. Der Vorteil dieses Giesswerkzeuges liegt darin, dass die Ausrichtung der Reihe der formgebenden Elemente auch bei langen zylindersymmetrischen Werkzeughohlräumen relativ leicht sichergestellt den kann.

Gemäss einem weiteren Ausführungsform sind die aneinander angepassten Anschlussteile der Stützelemente verzapfte Hohlräume. Der Vorteil dieses Giesswerkzeuges liegt darin, dass reproduzierbarer Werkzeughohlraum sichergestellt auch dann, wenn die Form der Elemente von einer zylindersymmetrischen Form abweicht.

Das erfindungsgemässe Werkzeug dient zur Herstellung von Hochspannungsisolatoren, die mit Kunststoffschirmen zur Verlängerung der Krichstrecke versehen sind.

Im weiteren wird die Erfindung mit Hilfe von Ausführungsbeispielen in den beigelegten Zeichnungen näher erläutert.
- Fig. 1: zeigt eine mögliche Ausführungsform der Erfindung in einem Halbschnitt,
- Fig. 2: zeigt die Reihe der elastischen formgebenden Elemente in einer möglichen Ausführungsform in einer Untersicht,
- Fig. 3: zeigt den Schnitt entlang der Linie A-A der Fig. 2,
- Fig. 4: zeigt eine weitere Ausführungsform der Reihe der elastischen formgebenden Elemente in einer Untersicht,
- Fig. 5: zeigt den Schnitt entlang der Linie A-A der Fig. 4,
- Fig. 6: zeigt einen Teil einer weiteren Ausführungsform des Giesswerkzeuges in Halbsicht und in dem Schnitt durch die Achse,
- Fig. 7: zeigt eine weitere Ausführungsform des elastischen formgebenden Elementes in einer Untersicht,
- Fig. 8: zeigt einen Schnitt der Fig. 7 entlang der Linie A-A,
- Fig. 9: die Ansicht des elastischen geraden Profils von der Endplatte her, wobei dieses Profil bei Herstellung einer weiteren Ausführung des formgebenden Elementes verwendet wird,
- Fig. 10: zeigt die Ansicht der in Fig. 9 gezeigten geraden Profils von der Seite der formgebenden Oberfläche her,
- Fig. 11: zeigt eine weitere Ausführungsform des formgebenden Elementes in Untersicht,
- Fig. 12: den Schnitt entlang der Linie A-A der Fig. 11, wobei die Hälfte der Figur einen Halbschnitt zeigt,
- Fig. 13: zeigt eine weitere Ausführungsform des formgebenden Elementes in perspektivischer Ansicht,
- Fig. 14: zeigt eine weitere Ausführungsform des formgebenden Elementes in Draufsicht,
- Fig. 15: zeigt den Schnitt entlang der Linien A-A und B-B der Fig. 14,
- Fig. 16: zeigt eine mögliche Ausführungsform des formgebenden Elementes und des zugehörigen Stützelementes in einem Halbschritt,
- Fig. 17: zeigt einen Teil einer weiteren Ausführung des erfindungsmässigen Giesswerkzeuges ohne Stützelemente, in einem Halbschnitt,
- Fig. 18: zeigt einen Teil einer weiteren Ausführung des Giesswerkzeuges ohne Stützelemente, in einem Halbschnitt
- Fig. 19: zeigt eine weitere Ausführungsform des elastischen formgebenden Elementes und des zugehörigen Stützelementes in einem Halbschnitt,
- Fig. 20: zeigt eine weitere Ausführungsform des elastischen formgebenden Elementes in einem Halbschnitt,
- Fig. 21: zeigt eine weitere Ausführungsform des elastischen formgebenden Elementes in einem Halbschnitt,
- Fig. 22: zeigt eine weitere Ausführungsform des elastischen formgebenden Elementes in einem Halbschnitt,
- Fig. 23: zeigt eine weitere Ausführungsform des formgebenden Elementes in Untersicht und den Ausbruch entlang der Linie B-B der Fig. 24 im Schnitt,
- Fig. 24: zeigt den Schnitt entlang der Linie A-A der Fig. 23,
- Fig. 25: zeigt eine weitere Ausführungsform des formgebenden Elementes im Axialschnitt,
- Fig. 26: zeigt eine weitere Ausführungsform des formgebenden Elementes im Axialschnitt,
- Fig. 27: zeigt eine weitere Ausführungsform des formgebenden Elementes in einer Untersicht,
- Fig. 28: zeigt den Schnitt entlang der Linie A-A der Fig. 27,
- Fig. 29: zeigt eine weitere mögliche Ausführungsform des formgebenden Elementes in einer Untersicht
- Fig. 30: zeigt den Schnitt entlang der Linie A-A der Fig. 29,
- Fig. 31: zeigt einen Teil der weiteren Ausführungsform des Giesswerkzeuges in einem Halbschnitt
- Fig. 32: zeigt eine weitere Ausführungsform der Stützelemente und der mit Ihnen gestützten Reihe der formgebender Elemente im Axialschnitt,
- Fig. 33: eine weitere Ausführungsform der Stützelemente und der durch die Stützelementen gestützten Reihe von formgebeneden Elementen im Axialschnitt,
- Fig. 34: zeigt noch eine weitere Ausführungsform der Stützelemente und der durch die Stützelemente gestützten Reihe der formgebenden Elemente in einer Untersicht,
- Fig. 35: zeigt einen Schnitt entlang der Linie A-A in Fig. 34,
- Fig. 36: zeigt eine weitere Ausführungsform des Stützelementes im Axialschnitt,

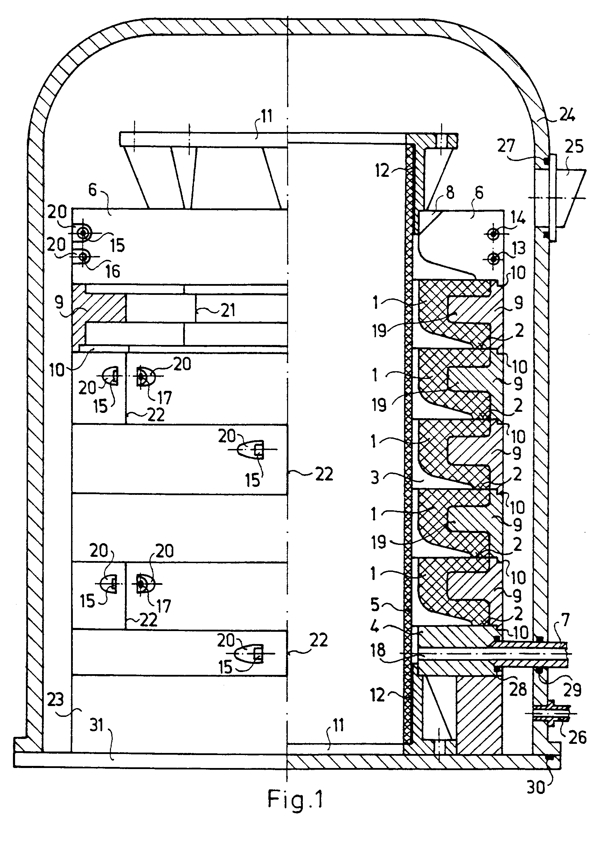

Fig. 1 zeigt eine Ausführungsform eines mit Vakuum arbeitenden Giesswerkzeues dessen geschlossenen inneren Hohlraum 3 die aneinander liegenden formgebenden Elemente 1, das untere Verschlusselement 4, das obere Verschlusselement 6 und das faserverstärkte Rohr 5 aus Kunststoff begrenzen. An beiden Enden des Rohres 5 sind mit Hilfe der Klebeschicht 12 Flansche 11 geklebt. Dieses auf dem unteren Flansch 11 stehende und auf der Grundplatte 31 ruhende Rohr wird der lasttragende Kern der zu giessenden Kunststoffform, die in diesem Fall ein die Kriechstrecke erhöhender mit Kunststoffschirmen versehener Hochspannungskompositisolator ist. Das sich an den unteren Flansch 11 und an den Abstandsring 23 abstützzende Verschlusselement 4 trägt die Stützelemente 9, die durch die Profilnuten 10 aufeinander angepasst und zu den Verschlusselementen 4 und 6 geschaltet sind. Die Stützelemente 9 und die Verschlusselemente 4 und 6 sind schellenartig zusammengebaute Halbringe, die dann durch die in der Ausnehmung 20 angeordneten und in die Gewindelöcher 14 und 17 geschraubten Innensechskantenschrauben 15 verbunden sind. In dem Verschlusselement 6 ist eine Öffnung 8 ausgebildet. Das Verschlußelement 6 und noch zwei weitere positionierende Bolzen 13, von denen der linksseitige in die Bohrung 16 passt. Die formgebenden Elemente 1 sind mit Schnitten 21 versehene, in sich selbst schliessende Ringprofile, die durch die Flansche 19 der Stützelemente 9 positioniert und mit den Oberflächen 2 zueinander gerichtet sind. Die Schnitte 21 der formgebenden Elemente 1 sind um die Symmetrieachse zueinander um 60° gedreht. Die Teilflächen 22 der Stützelemente 9 sind bezüglich der Ebenen der zu Ihnen gehörenden Schnitte 21 der formgebenden Elemente 1 senkrecht angeordnet. In dem Verschlusselement 4 ist eine Giessöffnung gebildet, zu der ein das Giessmaterial einführender Stutzen angeordnet ist. Der O-Ring 28 dichtet zwischen dem Verschlusselement 4 und dem Stutzen 8. Der Stutzen 8 ist auch durch die Vakuumglocke 24 geführt, in deren Wand ein Fenster 25 und ein Stutzen 26 für die Zuschaltung des Vakuumsystems angeordnet sind. Zwischen dem Fenster 25 und der Vakuumglocke 24 ist eine Vakuumabdichtung 27, zwischen der Vakuumglocke 24 und dem Stutzen 7 ist eine Vakuumabdichtung 29, und zwischen der Vakuumglocke 24 und der Grundplatte 31 ist eine Vakuumabdichtung 30 angeordnet. Während des Verfahrens wird erst die Luft aus der auf der Grundplatte 31 stehenden Vakuumglocke 24 über den Stutzen 26 entfernt, dann kann man das Werkzeug über den Stutzen 7 mit dem Giessmaterial aufgiessen.

Das den inneren Hohlraum 3 ausfüllende Giessmaterial aus der Öffnung 8 quellt hervor, was über das Fenster 25 bemerkt werden kann. Das in dem Werkzeug sich vernetzende Gießmaterial nimmt durch die formgebenden Elemente 1, das Rohr 5, dessen Flansche 11 sowie durch die Verschlußelemente 4 und 6 die gegebene Form auf.

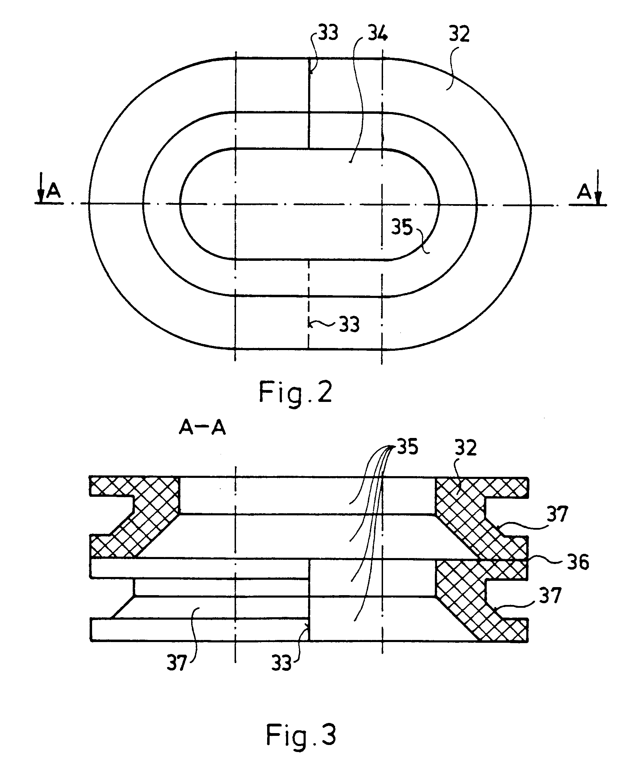

Fig. 2 und 3 zeigen eine weitere mögliche Ausführungsform des elastischen formgebenden Elementes. Die in sich selbst schließenden, mit Schnitten 33 versehenen formgebenden Elemente 32 liegen aneinander, und sind entlang der Fläche 36 miteinander verbunden. Auf der Seite des derart gebildeten inneren Hohlraums 34 ist die formgebende Fläche 35 der formgebenden Elemente 32, während auf der gegenüberliegenden Seite Nuten 37 für den in das formgebende Element 32 einreichenden Flansch der Stützelemente sind, wie bei der Beschreibung der Fig. 1 schon beschrieben wurde.

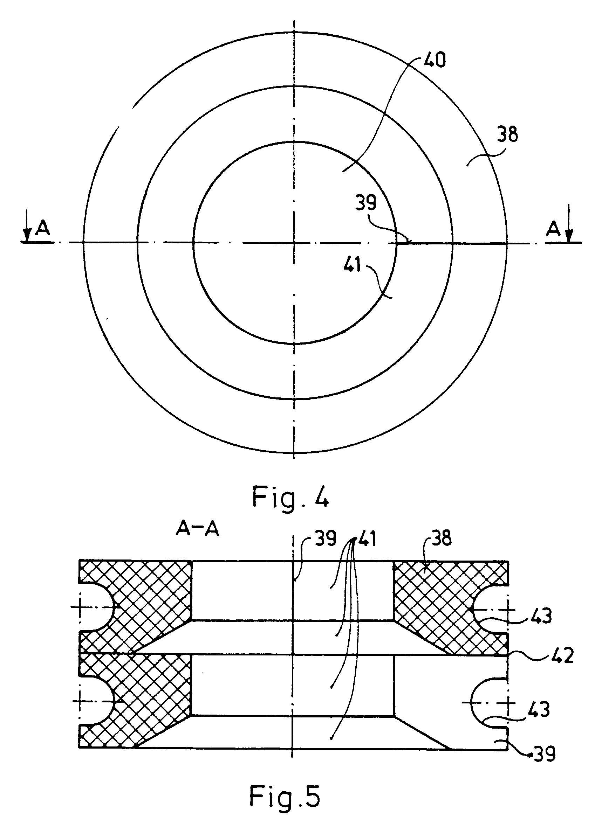

Die Fig. 4 und 5 zeigen eine weitere Ausführungsform des elastischen formgebenden Elementes. Die mit Schnitten 39 versehenen ringförmigen formgebenden Elemente 38 liegen aufeinander und sind entlang der Fläche 42 zueinander gerichtet. Auf der Seite von dem derart gebildeten inneren Hohlraums 40 her ist die formgebende Fläche 41 der ormgebenden Elemente 38 während auf der gegenüberliegenden Seite Nuten 43 für den in das formgebende Element einreichenden Flansch der Stützelemente sind, wie bei der Fig. 1 schon erwähnt wurde.

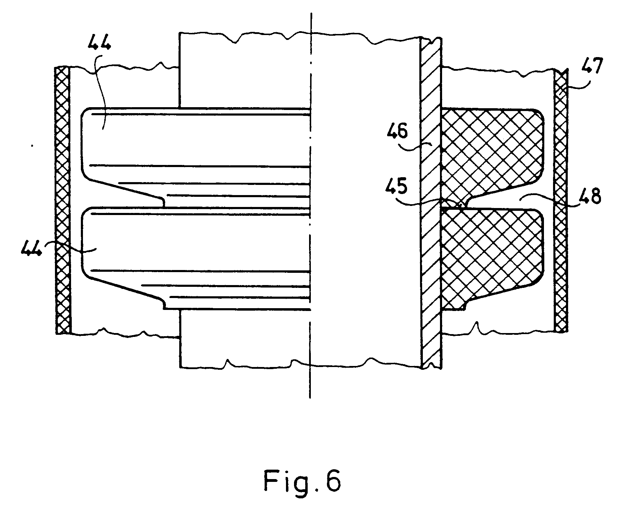

Fig. 6 zeigt einen Teil einer weiteren möglichen Ausführungsform des erfindungsmässigen Gießwerkzeuges. Die kontinuierlichen ringförmigen formgebenden Elemente 44 sind entlang dem äußeren Mantel des Stützelementes 46 eines Stahlrohres angeordnet und zwar derart, daß sie mit ihren Flächen 45 zueinander gerichtet sind. Die Reihe der formgebenden Elemente 44 wird konzentrisch mit einem Kunststoffrohr 47 umgeben, und zwischen denen formt sich der Hohlraum 48 des Gießwerkzeuges. Nach der Auffüllung des Hohlraums 48 mit dem Gießmaterial, kann man auf dem inneren Mantel des Rohres die Kunststoffform formen.

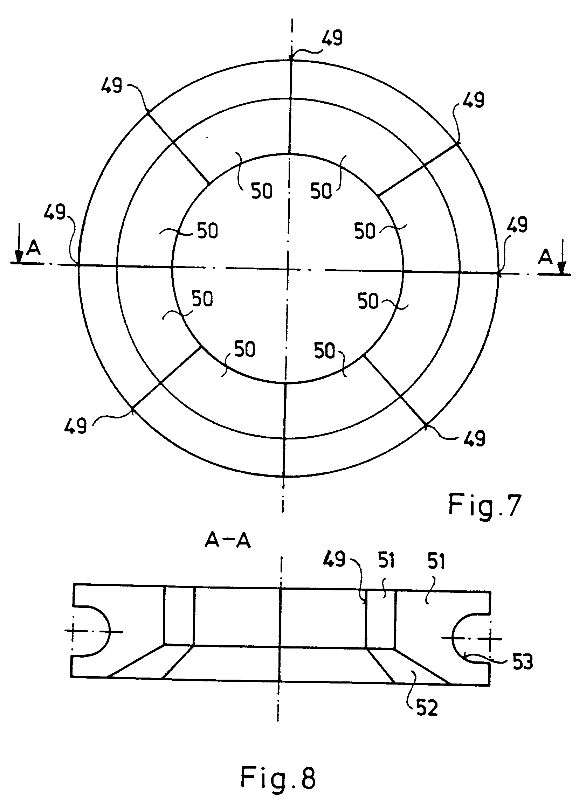

Fig. 7 und 8 zeigen eine weitere Ausführungsform des formgebenden Elements. Das ringförmige formgebende Element 54 beinhaltet acht Schnitte 49, die in gleichem Winkel zueinander ausgebildet sind. Die Schnitte 49 teilen das formgebende Element 54 in Segmente 50. Jedes Segment 50 hat eine zylindrische formgebende Fläche 51, eine kugelförmige formgebende Fläche 52 und eine Nut 53 für den in das formgebende Element einreichenden Flansch der Stützelemente.

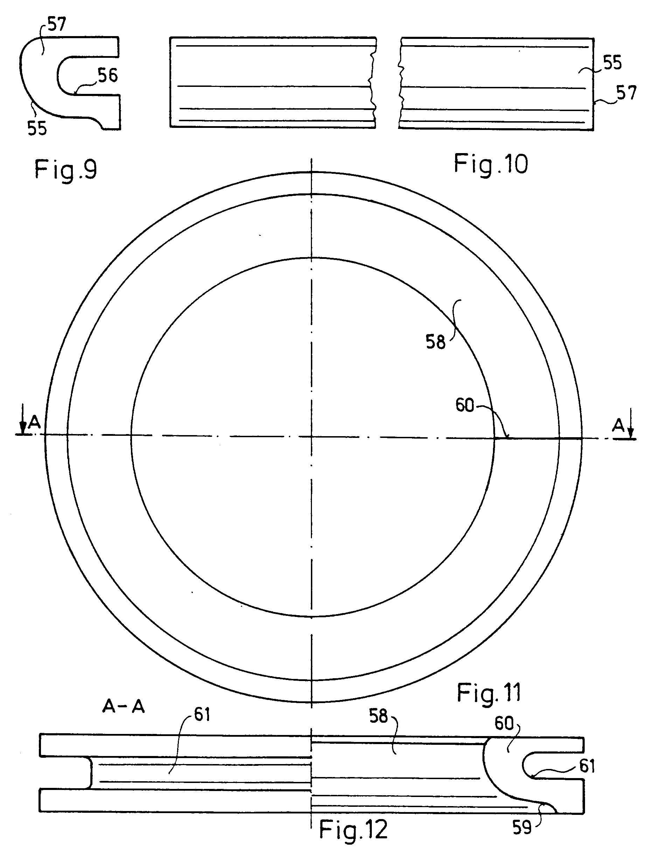

In den Fig. 9 und 10 ist ein elastisches gerades Profil 55 zu sehen, das in Längsrichtung eine Nut 56 von der Endplatte 57 her gesehen, und eine Nut 56 von der gegenüberliegenden Seite her gesehen, enthält.

Die Fig. 11 und 12 zeigen eine weitere mögliche Ausführungsform des formgebenden Elementes, das aus dem geraden Profil 55 gemäß Fig. 9 und 10 ringförmig gebogen ausgestaltet ist. Das auf Form gebogene gerade Profil 55 zeigt von der anpassenden Endplatte 60 her gesehen die Kontur 59 der formgebenden Fläche des formgebenden Elementes 58. In dem äußeren Mantel des formgebenden Elementes 58 ist die Nut 61 für den hineinreichenden Flansch des Stützelementes ausgebildet.

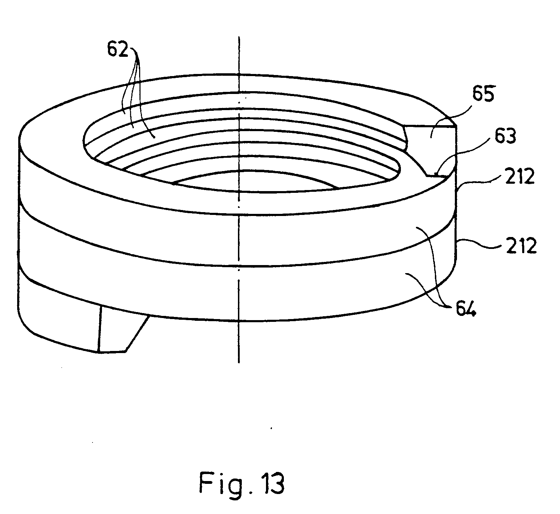

Fig. 13 zeigt eine weitere mögliche Ausführungsform des elastischen formgebenden Elementes, das aus einem geraden Profil mit Endplatte 65 durch spiralartiges Aufrollen ausgestaltet wurde. Die übereinander liegenden Windungen sind entlang der Fläche 63 zueinander gerichtet und schließen einen zylindersymmetrischen Hohlraum ein, dessen Mantel die formgebende Fläche 62 bildet. Die äußere Fläche 64 des gewickelten formgebenden Elementes 212 bildet einen Zylindermantel, der zweckmäßig durch die innere Mantelfläche eines rohrartigen Stützelements gestützt werden kann.

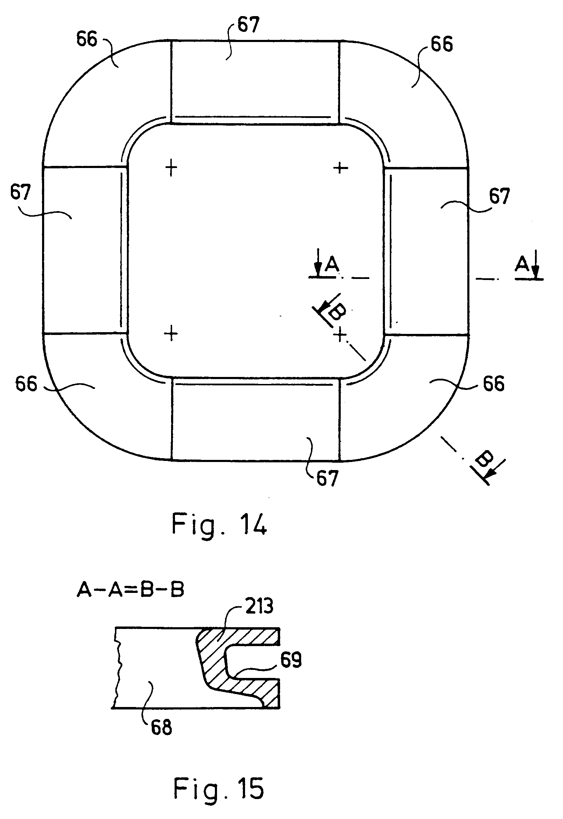

Die Figuren 14 und 15 zeigen eine weitere mögliche Ausführungsform des formgebenden Element s, das aus Segmenten 66 eines Ringprofils und aus Teilen eines geraden Profils gefertigt ist. Die Schnitte entlang der Linien A-A und B-B zeigen dieselbe Profilform, und man kann die Kontur der formgebenden Fläche 68 des formgebenden Elementes 213 und die Kontur der für das Stützelement gebildeten Nut 69 sehen.

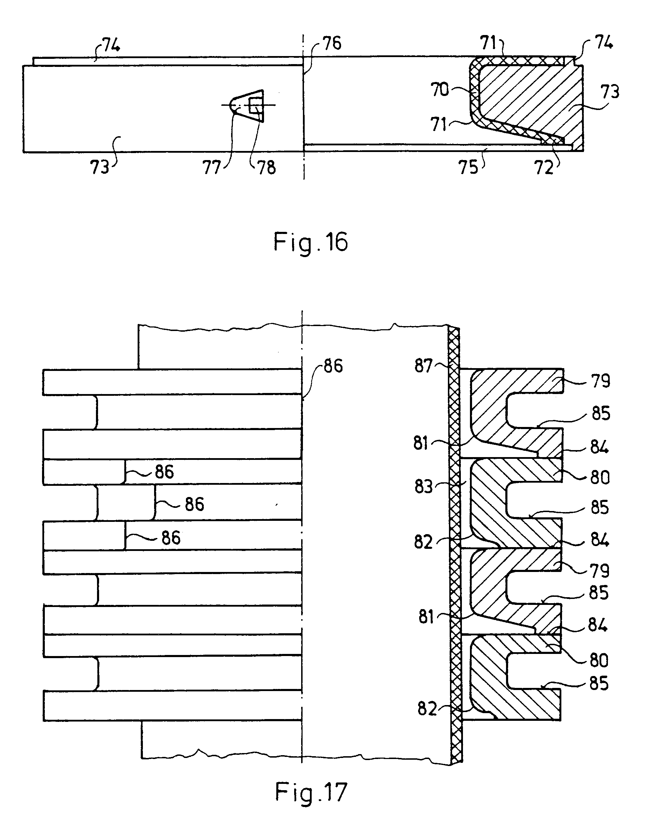

Fig. 16 zeigt eine weitere mögliche Ausführungsform des formgebenden Elements und des dazugehörigen Stützelements. Das dünnwandige, ringförmige, kontinuierliche formgebende Element 70 wird mit Hilfe von zwei halbringförmigen Schellen 73 gestützt und von außen umschlossen. Die entlang der Fläche 66 anpassenden Schellen 73 sind mit einer in der Ausnehmung 77 angeordneten Innensechskantenschraube 78 zusammengefügt. Die Nuten 74 und 75 der Schellen 73 dienen zur entsprechend angepaßten Verbindung der das Gießwerkzeug bildenden gleichförmigen Stützelemente, wie schon in Fig. 1 gezeigt wurde. Die in dem Gießwerkzeug derart in Reihe angeordneten formgebenden Elemente 70 sind mit ihren Flächen 72 zueinander gerichtet, und die formgebenden Flächen 71 bilden eine zusammenhängende Werkzeughohlraumfläche.

Die Fig. 17 zeigt einen Teil einer weiteren Ausführungsform des erfindungsmässigen Gießwerkzeuges. In dieser Figur ist nur die den Hohlraum 83 des Gießwerkzeuges grenzenden wichtigsten Elemente d.h. das Kunststoffrohr 87 und die dickwandigen formgebenden Elemente 79 und 80 gezeigt, da die weiteren Bauelemente des Gießwerkzeuges z.B. die in die Nuten 85 einragenden Stützelemente, mit der Ausführung gemäß Fig. 1 übereinstimmen. Die in Fig. 17 gezeigten ringförmigen mit Schnitten 86 versehenen formgebenden Elemente des Werkzeuges sind auf zweierlei Art gefertigt: Die Flächen 81 der formgebenden Elemente 79 begrenzen einen Hohlraumteil eines weit herausragenden Schirms, die Flächen 82 der formgebenden Elemente 80 begrenzen aber einen Hohlraumteil eines weniger weit herausragenden Schirmes. Die durch die Flächen 84 zueinanderschließenden wechselnd aneinander angeordneten formgebenden Elemente 78 und 80 bilden mit dem Rohr 87 einen Hohlraum, der das Gießen von sogenannten Kunststoffirolatoren mit wechselnden Schirmen ermöglicht.

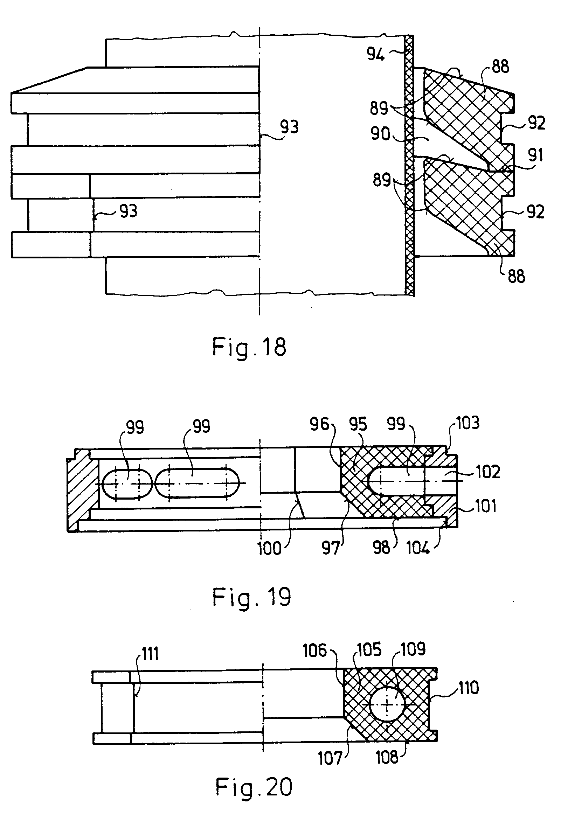

Fig. 18 zeigt einen Teil einer weiteren Ausführungsform des erfindungsmässigen Gießwerkzeuges in einer vereinfachten Form, wie es auch in Fig. 17 gezeigt wurde. Die Reihe der um das Kunststoffrohr 94 konzentrisch angeordneten formgebenden Elemente 88 bildet einen Werkzeughohlraum, in dem die formgebenden Flächen 89 derart gebildet sind, daß darin Kunststoffisolatoren mit unterschnittenem Schirm gegossen werden könnte. Die ringförmigen formgebenden Elemente 88 sind dickwandig und massiv gefertigt, sie sind mit Schnitten 93, und einer Nut 92 für das Stützelement versehen. Die Schnitte 93 der mit den Flächen 91 aneinander anschließenden benachbarten formgebenden Elemente 88 sind um die Symmetrieachse zueinander gedreht gefertigt.

Fig. 19 zeigt eine weitere Ausführungsform des formgebenden Elementes und des dazugehörigen Stützelementes. In dem ringförmigen formgebenden Element 95 vertiefen sich von dem Stützelement 101 her Hohlräume 99, die durch die Bohrungen 102 des Stützelementes 101 nach außen geöffnet sind. Das formgebende Element 95 hat einen Schnitt 100, zylinderförmige formgebende Fläche 96, eine kugelartige formgebende Fläche 97 sowie eine Fläche 98, durch die sich das formgebende Element an das benachbarte formgebende Element in dem Gießwerkzeug anschließt. Die Nuten 103 und 104 des Stützelementes 101 dienen zu der Verbindung und Ausrichtung des formgebenden Elementes zu den Stützelementen des benachbarten formgebenden Elementes.

Fig. 20 zeigt eine weitere Ausführungsform des formgebenden Elementes. In dem Schnitt des ringförmigen formgebenden Elementes 105 ist ein geschlossener Hohlraum 109 gebildet. Das mit dem Schnitt 111 versehene formgebende Element hat eine zylindrische formgebende Fläche 106, eine kugelartige formgebende Fläche 107 sowie eine Fläche 108, durch die in Reihe angeordnete formgebende Elemente aneinander anschließen. Die Nut 110, die in dem äußeren Mantel des formgebenden Elementes gebildet ist, dient als Bestimmungsnut für den in das formgebende Element 105 einragenden Flansch.

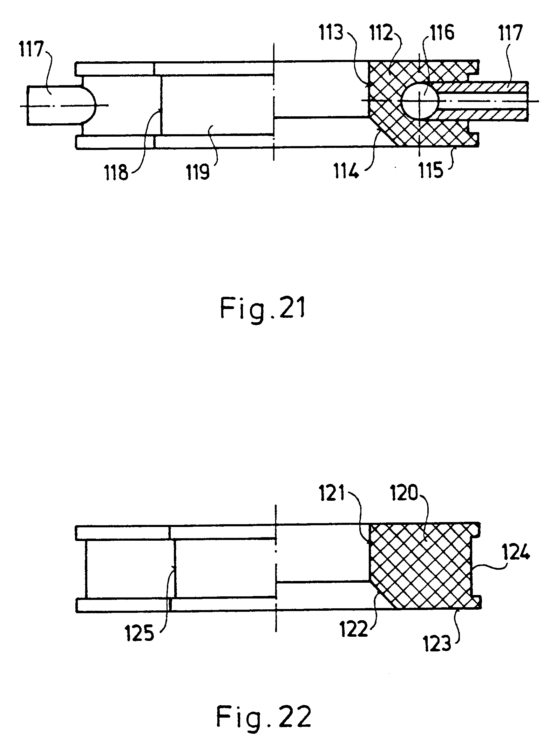

Fig. 21 zeigt noch eine weitere Ausführungsform des erfindungsmäßigen formgebenden Elementes. Im Querschnitt des ringförmigen formgebenden Elementes 112 ist ein Hohlraum 116, der durch Stutzen 117 mit dem äußeren Raum in Verbindung steht. Das mit Schnitten 118 gebildete formgebende Element hat eine zylindrische formgebende Fläche 113, eine kugelartige formgebende Fläche 114 sowie eine Fläche 115, durch die sich das formgebende Element an dem benachbarten Element in dem Gießwerkzeug anschließt. Die in dem äußeren Mantel des formgebenden Elements 112 gebildete Nut 119 dient als Bestimmungsnut für den in das formgebende Element einragenden Flansch des Stützelementes.

Fig. 22 zeigt wieder eine weitere mögliche Ausführungsform der erfindungsmäßigen formgebenden Elemente. Das ringförmige formgebende Element ist aus einem Material massiv und mit Schnitten 125 versehen gefertigt. Die kugelartige formgebende Fläche 122 ist von der einen Seite mit der zylindrischen formgebenden Fläche 121, von der anderen Seite mit der Fläche 123 begrenzt, durch die sich an ein Nachbarelement in dem Werkzeug anschließt. Die in dem äußeren Mantel des formgebenden Elementes gebildete Nut 124 dient als Bestimmungsnut für den in das formgebende Element einragenden Flansch des Stützelementes.

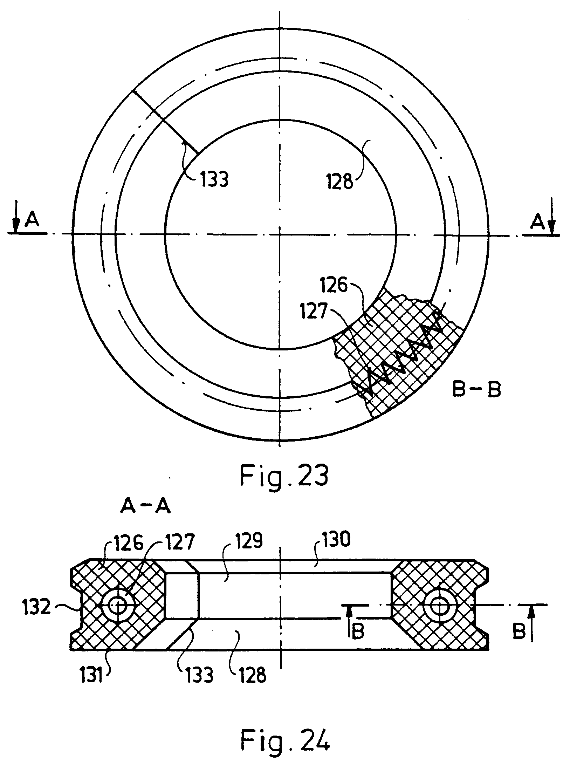

Die Fig. 23 und 24 zeigen wieder eine weitere Ausführungsform des erfindungsmäßigen formgebenden Elementes. Im Querschnitt des ringförmigen formgebenden Elementes 126 ist ein Federeinsatz 126 aus Metall, der auch ringförmig ausgebildet und in der Ebene des Schnittes 133 des formgebenden Elementes unterbrochen ist. Die zylindrische formgebende Fläche 129 des formgebenden Elementes 126 wird auf der einen Seite von der kugelförmigen formgebenden Fläche 130 auf der anderen Seite von der auch kugelförmigen Fläche 128 begrenzt. Das formgebende Element 126 schließt sich durch die Fläche 131 an das benachbarte Element des Gießwerkzeuges an. In dem äußeren Mantel des formgebenden Elementes 126 ist eine Nut für die Ausrichtung des Stützelementes.

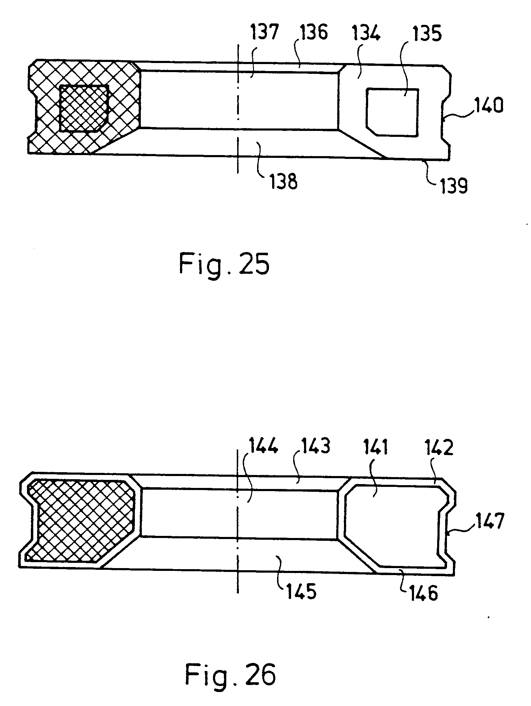

Fig. 25 zeigt wieder eine weitere Ausführungsform des formgebenden Elementes. Das geschnittene ringförmige elastische formgebende Element 134 hat in einem Profilquerschnitt einen biegbaren inneren Kern 135. Die zylindrische formgebende Fläche 137 des formgebenden Elementes 134 ist auf der einen Seite durch die kugelartige formgebende Fläche, auf der anderen Seite durch die auch kugelförmige formgebende Fläche 138 begrenzt. Das formgebende Element 134 schließt sich durch die Fläche 139 an das benachbarte Element in dem Werkzeug an. In dem äußeren Mantel des formgebenden Elements 134 ist eine Nut 140.

Fig. 26 zeigt eine weitere Ausführungsform des formgebenden Elementes. Das geschnittene ringförmige formgebende Element ist mit einem beständigen formtrennenden Überzug 142 versehen. Die zylindrische formgebende Fläche 144 des formgebenden Elementes 141 ist auf der einen Seite durch die kugelförmige formgebende Fläche, auf der anderen Seite durch die auch kugelförmige formgebende Fläche 145 begrenzt. Das formgebende Element 141 schließt sich durch die Fläche 146 an das benachbarte Element des Werkzeuges an. In dem äußeren Mantel des formgebenden Elementes 141 ist eine Nut 147 gebildet.

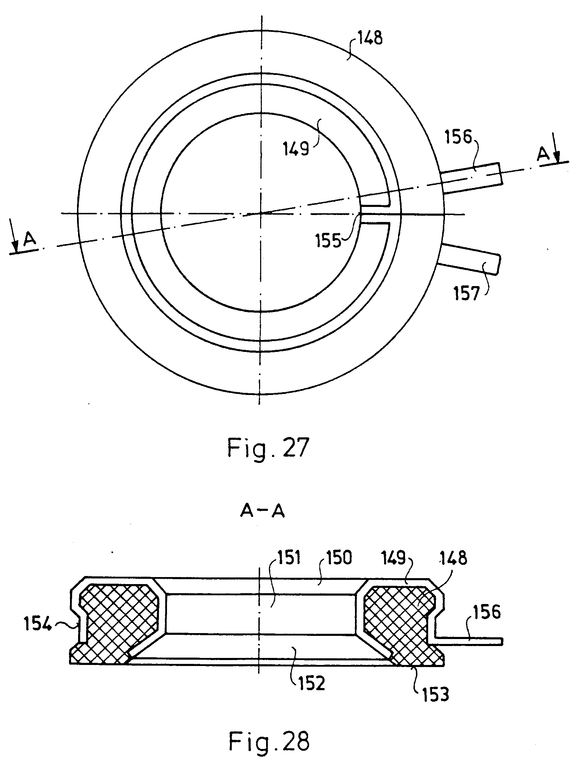

Die Figuren 27 und 28 zeigen noch eine weitere Ausführungsform des formgebenden Elementes. Das ringförmige, aus elektrisch isolierendem Material hergestellte formgebende Element 148 ist mit einem elektrisch leitenden Überzug 149 nahezu auf der ganzen Oberfläche, die formgebenden Flächen 150, 151 und 152 eingeschlossen, aber mit Ausnahme der Fläche des Schnittes 155, sowie der unmittelbaren Umgebung dessen Kanten, und mit der Ausnahme der Fläche 153 und der unmittelbaren Umgebung deren Kanten überzogen. Der elektrisch leitende Überzug 149 steht mit den elektrischen Anschlußelementen 156, 157 im Kontakt, die aus der äußeren mantelseitigen mit elektrisch leitendem Überzug versehenen Nut 154 des formgebenden Elements 148 auf der beiden Seite des Schnittes 155 symmetrisch angeordnet herausragen.

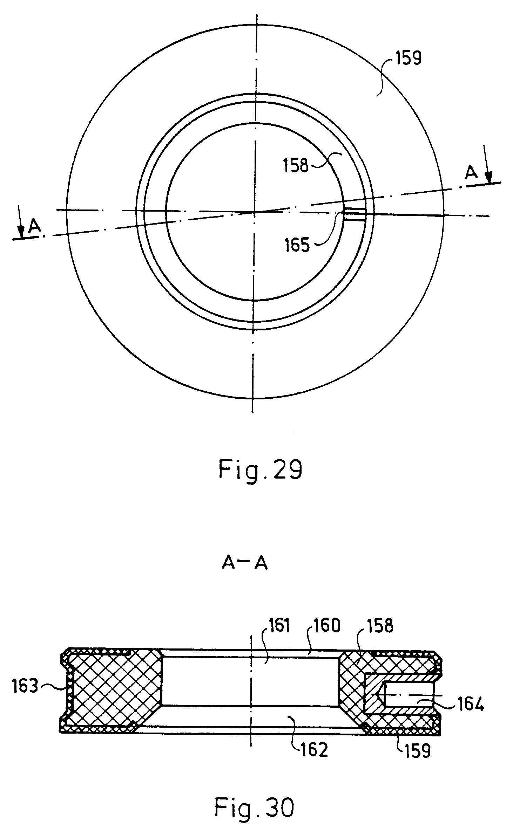

Die Fig. 29 und 30 zeigen wieder eine weitere Ausführungsform des erfindungsmässigen formgebenden Elementes. Die Fläche des ringförmigen aus elektrisch leitendem Material hergestellten formgebenden Elementes 158 ist mit einem isolierenden Überzug 159, die Flächen und die unmittelbare Umgebung der Kanten des Schnittes 165 eingeschlossen mit der Ausnahme aber der formgebenden Flächen 160, 161, 162 versehen. In das formgebende Element 158 - von der Richtung der äußeren mantelseitigen Nut 163 - ragen zwei elektrische Anschlußhülsen 164 auf der beiden Seite des Schnittes 165 symmetrisch angeordnet hinein.

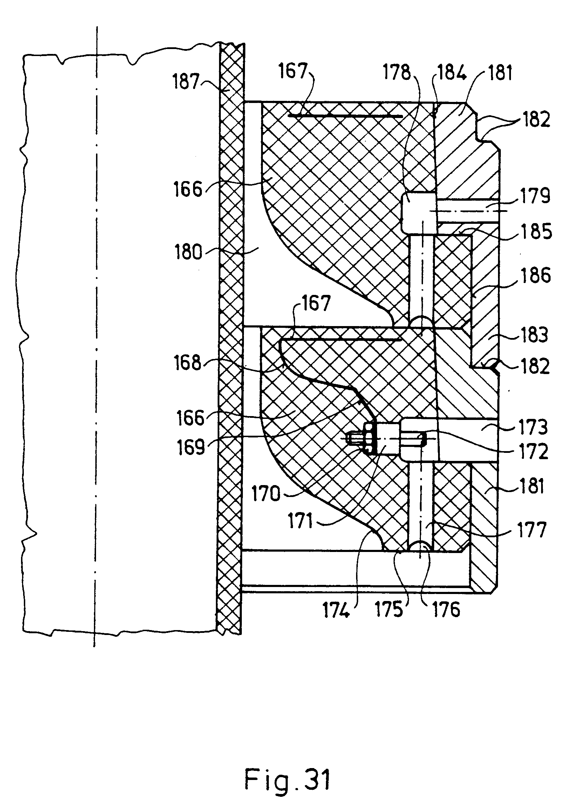

Fig. 31 zeigt einen Teil einer weiteren Ausführungsform des Gießwerkzeuges im Axialschnitt. Aus den ringförmig, in Reihe angeordneten formgebenden Elementen kann man in der Figur zwei Elemente sehen, und zwar derart, daß sie seitlich der äußeren Mantelflächen mit Stützelementen 181 gestützt und mit einem Kunststoffrohr 187 konzentrisch angeordnet sind. Die formgebenden Elemente 166 sind mit ihren Flächen 175 abgedichtet zueinander angeordnet, während die formgebende Fläche 174 und der äußere Mantel des Rohres 187 den Werkzeughohlraum einschließt. Die formgebenden Elemente 166 sowie die Mantelflächen 184, 186 der Stützelemente 181 sind mässig kugelartig zueinander angepaßt. In den Zwischenteilen ist die Anpassung mit Hilfe von Schultern gelöst. Der Flansch 183 des Stützelementes 181 paßt sich auch mäßig kugelartig in die Nut 182 des benachbarten Stützelementes. In die Fläche 175 des formgebenden Elementes 166 vertieft sich eine Nut 176, die durch die Bohrung 177 mit dem offenen Hohlraum 178, und durch die Bohrung 179 des Stützelementes mit dem Außenraum in Verbindung steht. Die Öffnung 173 der Stützelemente 181 ist für streckbare elektrische Anschlußelemente gefertigt. In dem formgebenden Element 166 ist nämlich ein Widerstandsheizdrahteinsatz gelegt, der mit elektrischen Leitungen 168 zu den Lagern 169 geschaltet ist, und die Lager 169 sind mit Muttern 170 zu den in dem Block eingebauten elektrischen Steckern 172 befestigt.

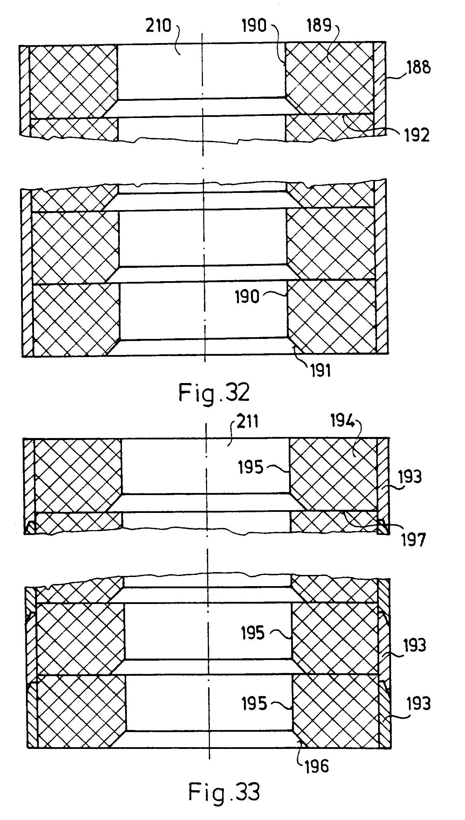

Fig. 32 zeigt eine weitere Ausführungsform des Gießwerkzeuges. In dem starren, gehäuseartigen, mit zylindrischem Querschnitt versehenen Stützelement 188 sind ringförmige formgebende Elemente 189, mit den Anschlußflächen 192 zueinander schließend nacheinander angeordnet. Die formgebenden Flächen 190, 191 begrenzen den Hohlraum 210 des Werkzeuges.

Fig. 33 zeigt eine weitere Ausführungsform des Gießwerkzeuges. Die ringförmigen angepaßten zueinander schließenden Stützelemente 193 bilden ein rohrförmiges starres Gehäuse, in dem auch ringförmige formgebende Elemente in Reihe angeordnet sind, die mit den Flächen 197 zueinander gerichtet sind. Die formgebenden Flächen 195 und 196 begrenzen den Hohlraum 211 des Werkzeuges.

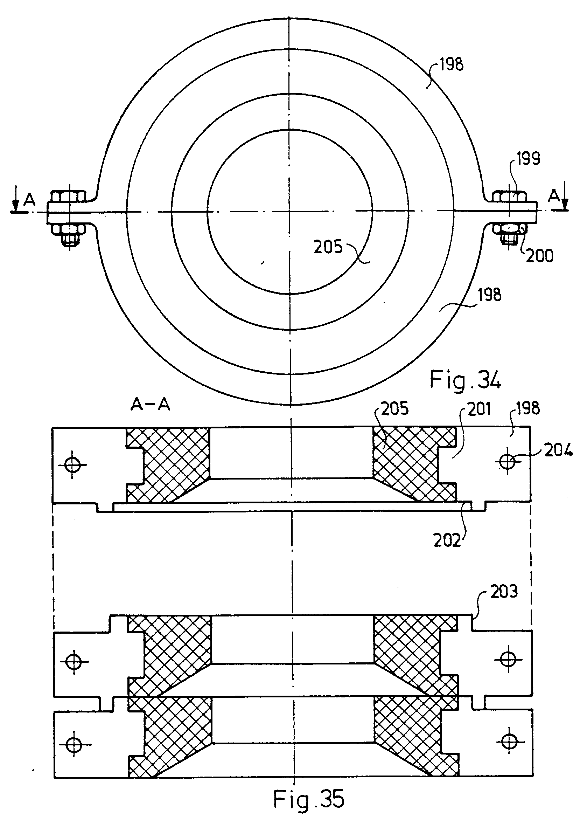

Die Fig. 34 und 35 zeigen eine weitere Ausführungsform des Werkzeuges. Jedes in Reihe angeordnete formgebende Element ist von aus Schellen 198 bestehenden Stützelementen umschlossen, deren Flansch 201 in das formgebende Element 205 hineinragt. Die Schellen 198 sind durch die Bohrungen 204 durchgeführten Schrauben 109 und Muttern 200 aneinander befestigt. Die Kanten 202 der Schellen 198 passen immer in die Nuten der benachbarten Schellen ein.

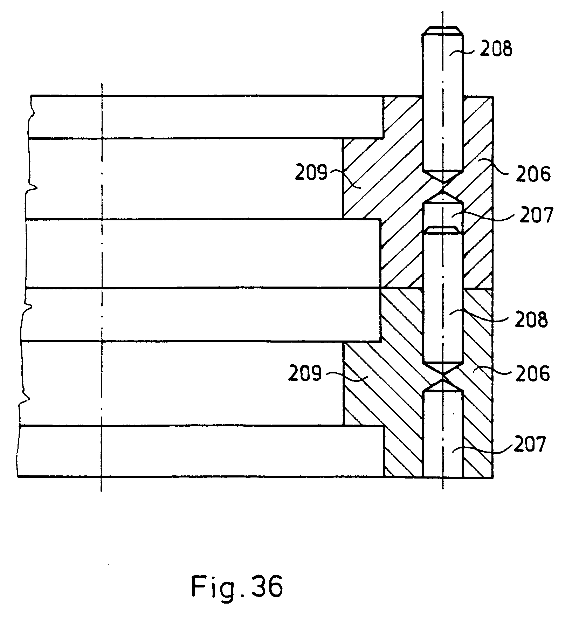

Fig. 36 zeigt eine Ausführungsform des Stützelementes. Jedes mit innerem Flansch versehene Stützelement 206 hat einen Stift, der in die Bohrung 207 des benachbarten Stützelementes paßt.

Mit Hilfe des erfindungsmässigen Gießwerkzeuges können aus einem reaktiven Gußmaterial auch solche Kunststoffgusse hergestellt werden, die stark gegliedert sind und deren Fläche mit Unterschneidungen versehen ist.

Die Anwendung der Erfindung ist besonders bei der Herstellung von Gussen, die eine Vielzahl identischer sich periodisch wiederholender formgebender Elemente beinhaltet, wirtschaftlich, insbesondere bei kleinen Produktionsserien.

Derartige Anwendungsmöglichkeiten sind z.B. die Starkstrom-Hochspannungsisolatoren, die mit Kunststoffschirmen zur Erhöhung der Kriechstrecke versehen sind.

## Patentansprüche

1. Giesswerkzeug, das aus in Reihe angeordneten formgebenden Elementen (1, 32, 38, 44, 54, 58, 70, 79, 88, 95, 105, 112, 120, 126, 134, 141, 148, 158, 166, 189, 194, 205, 212, 213) zusammengebaut ist, wobei die formgebenden Elemente mit sich aneinander anschließenden Flächen versehen sind, wobei die Reihe der formgebenden Elemente einen einzigen geschlossenen inneren Hohlraum (3) bildet, und an mindestens einem ihrer Enden mit einem den inneren Hohlraum (3) verschließenden Verschlußelement (5, 6) versehen ist, wobei weiterhin zu dem inneren Hohlraum (3) auf der unteren Seite des Gießwerkzeuges ein Anschlußstutzen (7) für die Zuführung des Gußmaterials ausgebildet ist, während auf der gegenüberliegenden Seite eine Öffnung ausgebildet ist, und wobei die formgebenden Elemente mindestens teilweise aus einem elastischen Material bestehen,
dadurch **gekennzeichnet,** daß Abstandshalter bildende Stützelemente (9, 46 73, 101, 181, 188, 193, 198, 206) vorgesehen sind, die die elastischen formgebenden Elemente (1, 32, 38, 44, 54, 58, 70, 79, 88, 95, 105, 112, 120, 126, 134, 141, 148, 158, 166, 189, 194, 205, 212, 213) außen umgeben, und die miteinander angepaßten Anschlußteilen (10, 74, 75, 103, 104, 182, 202, 203, 207, 208) versehen sind.

2. Giesswerkzeug nach Anspruch 1, **dadurch gekennzeichnet,** dass das formgebende Element (1, 32, 38, 44, 54, 58, 70, 79, 88, 95, 105, 112, 120, 126, 134, 141, 148, 158, 166, 189, 194, 205, 213) aus einem in sich selbst schliessenden Profil besteht.

3. Giesswerkzeug nach Anspruch 2, **dadurch gekennzeichnet,** dass das selbstschliessende Profil (1, 38, 44, 54, 58, 70, 79, 88, 95, 105, 112, 120, 126, 134, 141, 148, 158, 166, 189, 194,205) ringförmig ist.

4. Giesswerkzeug nach Anspruch 2 oder 3, **dadurch gekennzeichnet,** dass das selbstschliessende Profil (44, 70) kontinuierlich lich ist.

5. Giesswerkzeug nach Anspruch 2 oder 3, **dadurch gekennzeichnet,** dass das selbstschliessende Profil (1, 32, 38, 54, 58, 79, 88, 95, 105, 112, 120, 126, 134, 141, 148, 158, 166 189, 194, 205, 213) an mindestens einer Stelle aufgeschlitzt ist.

6. Giesswerkzeug nach Anspruch 2 oder 3, **dadurch gekennzeichnet,** dass das selbstschliessende Profil (58) aus einem geraden Profil durch Biegen auf Form ausgebildet ist.

7. Giesswerkzeug nach Anspruch 1, **dadurch gekennzeichnet,** dass das elastische formgebende Element (64) aus einem spiralförmig aufgewickelten geraden Profil ausgebildet ist.

8. Giesswerkzeug nach einem der Ansprüche 1 bis 3, **dadurch gekennzeichnet,** dass das elastische formgebende Element (213) durch eine Kombination von Segmenten ringförmiger Profile und geraden Profilstücken ausgebildet ist.

9. Giesswerkzeug nach Anspruch 4, **dadurch gekennzeichnet,** dass das selbstschliessende kontinuierliche Profil (70) dünnwandig ist.

10. Giesswerkzeug nach einem der Ansprüche 2 bis 8, **dadurch gekennzeichnet,** dass das Profil (1, 32, 38, 44, 54, 58, 79, 88, 95, 105, 112, 120, 126, 134, 141, 148, 158, 166, 189, 194, 205, 212, 213) dickwandig ist.

11. Giesswerkzeug nach Anspruch 10, **dadurch gekennzeichnet,** dass das dickwandige Profil (1, 32, 38, 44, 54, 58, 79, 88, 120, 126, 134, 141, 148, 158, 189, 194, 205, 212, 213) dicht (massiv) ist.

12. Giesswerkzeug nach Anspruch 10, **dadurch gekennzeichnet,** dass das dickwandige Profil (95, 105, 112, 166) holhräumig ist.

13. Giesswerkzeug nach Anspruch 12, **dadurch gekenzeichnet,** dass der Hohlraum des Profils (105) ein geschlossener Hohlraum ist.

14. Giesswerkzeug nach Anspruch 13, **dadurch gekennzeichnet,** dass der geschlossene Hohlraum (112) mit mindestens einem Rohranschluss an den Aussenraum versehen ist.

15. Giesswerkzeug nach einem der Ansprüche 1 bis 14, **dadurch gekennzeichnet,** dass das formgebende Element (1, 32, 38, 44, 54, 58, 70, 79, 88, 95, 105, 112, 120, 189, 194, 205, 212, 213) aus einem einzigen Material besteht.

16. Giesswerkzeug nach einem der Ansprüche 1 bis 14, **dadurch gekennzeichnet,** dass das formgebende Element (126, 134, 141, 148, 158, 166) aus mindestens zwei verschiedenen Materialien besteht.

17. Giesswerkzeug nach Anspruch 16, **dadurch gekennzeichnet,** dass das formgebende Element (126, 134) einen biegsamen inneren Kern aufweist.

18. Giesswerkzeug nach Anspruch 16, **dadurch gekennzeichnet,** dass auf der Oberfläche des formgebenden Elementes (141) ein beständiger formtrennender Überzug ausgebildet ist.

19. Giesswerkzeug nach Anspruch 16, **dadurch gekennzeichnet,** dass das formgebende Element (148) aus einem elektrisch isolierenden Material besteht, wobei das elektrisch isolierende Material mit einem elektrisch leitenden Überzug versehen ist.

20. Giesswerkzeug nach Anspruch 16, **dadurch gekennzeichnet,** dass das formgebende Element (158) aus einem elektrisch leitenden Material besteht, wobei das elektrisch leitende Material mit einem elektrisch isolierenden Überzug versehen ist.

21. Giesswerkzeug nach Anspruch 16 oder 18, **dadurch gekennzeichnet,** dass in dem Querschnitt des formgebenden Elementes (166) eine Widerstandsheizdrahteinlage angeordnet ist.

22. Giesswerkzeug nach einem der Ansprüche 1 bis 21, **dadurch gekennzeichnet,** dass die Gesamtheit der formgebenden Elemente von aussen als Stützelement (46, 181, 188, 193) von einem steifen Gehäuse umgeben ist oder von innen von einem steifen Gehäuse abgestützt ist.

23. Giesswerkzeug nach Anspruch 22, **dadurch gekennzeichnet,** dass das steife Gehäuse (46, 181, 188, 193) einen zylindrischen Querschnitt aufweist.

24. Giesswerkzeug nach Anspruch 23, **dadurch gekennzeichnet,** dass das einen zylindrischen Querschnitt aufweisende steife Gehäuse (181, 193) aus Ringen ausgebildet ist.

25. Giesswerkzeug nach einem der Ansprüche 1 bis 21, **dadurch gekennzeichnet,** dass die Stützelemente (9, 73, 101, 198, 206) der formgebende Elemente aus zwei Hälften bestehende Schellen sind.

26. Giesswerkzeug nach Anspruch 24 oder 25, **dadurch gekennzeichnet,** dass die einander angepassten Anschlussteile (10, 74, 75, 103, 104, 182, 202, 203) der Stützelemente Profilnuten sind.

27. Giesswerkzeug nach Anspruch 24 oder 25, **dadurch gekennzeichnet,** dass die einander angepassten Anschlussteile (207, 208) der Stützelemente verzapfte Hohlräume sind.

28. Giesswerkzeug nach einem der Ansprüche 1 bis 27, **dadurch gekennzeichnet,** dass es zur Herstellung von Hochspannungsisolatoren, die mit Kunststoffschirmen zur Verlängerung der Kriechstrecke versehen sind, dient.

## Claims

1. Casting tool which is composed of shaping elements (1, 32, 38, 44, 54, 58, 70, 79, 88, 95, 105, 112, 120, 126, 134, 141, 148, 158, 166, 189, 194, 205, 212, 213) arranged in series, wherein the shaping elements are provided with interconnecting surfaces, wherein the series of shaping elements forms a single, closed hollow space (3) and at least one of the ends of the elements is provided with a closure element (5, 6) for closing the inner hollow space (3), wherein furthermore towards the inner hollow space (3) on the lower side of the casting tool there is constructed a connecting sleeve (7) for supplying the casting material, whilst on the opposite side there is constructed an opening, and wherein the shaping elements are at least partly comprised of an elastic material,
**characterised** in that spacer forming support elements (9, 46, 73, 101, 181, 188, 193, 198, 206) are provided which externally surround the elastic shaping elements (1, 32, 38, 44, 54, 58, 70, 79, 88, 95, 105, 112, 120, 126, 134, 141, 148, 158, 166, 189, 194, 205, 212, 213) and which are provided with mutually adapted connecting parts (10, 74, 75, 103, 104, 182, 202, 203, 207, 208).

2. Casting tool according to claim 1,
**characterised** in that the shaping element (1, 32, 38, 44, 54, 58, 70, 79, 88, 95, 105, 112, 120, 126, 134, 141, 148, 158, 166, 189, 194, 205, 213) consists of a self-closing profile.

3. Casting tool according to claim 2,
**characterised** in that the self-closing profile (1, 38, 44, 54, 58, 70, 79, 88, 95, 105, 112, 120, 126, 134, 141, 148, 158, 166, 189, 194, 205) is annular.

4. Casting tool according to claim 2 or 3,
**characterised** in that the self-closing profile (44, 70) is continuous.

5. Casting tool according to claim 2 or 3,
**characterised** in that the self-closing profile (1, 32, 38, 54, 58, 79, 88, 95, 105, 112, 120, 126, 134, 141, 148, 158, 166, 189, 194, 205, 213) is slit open in at leat one place.

6. Casting tool according to claim 2 or 3,
**characterised** in that the self-closing profile (58) is constructed from a straight profile by bending to shape.

7. Casting tool according to claim 1, **characterised** in that the elastic shaping element (64) is constructed from a helically wound straight profile.

8. Casting tool according to one of the claims 1 to 3,
**characterised** in that the elastic shaping element (213) is constructed from a combination of segments of annular profiles and straight profile members.

9. Casting tool according to claim 4,
**characterised** in that the self-closing, continuous profile (70) has thin walls.

10. Casting tool according to one of the claims 2 to 8,
**characterised** in that the profile (1, 32, 38, 44, 54, 58, 79, 88, 95, 105, 112, 120, 126, 134, 141, 148, 158, 166, 189, 194, 205, 212, 213) has thick walls.

11. Casting tool according to claim 10,
**characterised** in that the thick-walled profile (1, 32, 38, 44, 54, 58, 79, 88, 120, 126, 134, 141, 148, 158, 189, 194, 205, 212, 213) is dense (solid).

12. Casting tool according to claim 10,
**characterised** in that the thick-walled profile (95, 105, 112, 166) is hollow.

13. Casting tool according to claim 12,
**characterised** in that the hollow space of the profile (105) is a closed hollow space.

14. Casting tool according to claim 13,
**characterised** in that the closed hollow space (112) is provided with at least one pipe connection to the outer space.

15. Casting tool according to one of the claims 1 to 14,
**characterised** in that the shaping element (1, 32, 38, 44, 54, 58, 70, 79, 88, 95, 105, 112, 120, 189, 194, 205, 212, 213) consists of a single material.

16. Casting tool according to one of the claims 1 to 14,
**characterised** in that the shaping element (126, 134, 141, 148, 158, 166) consists of at least two different materials.

17. Casting tool according to claim 16,
**characterised** in that the shaping element (126, 134) has a flexible inner core.

18. Casting tool according to claim 16,
**characterised** in that the surface of the shaping element (141) is constructed as a permanent parting cover.

19. Casting tool according to claim 16,
**characterised** in that the shaping element (148) consists of an electrically insulating material, in which the electrically insulating material is provided with an electrically conducting coat.

20. Casting tool according to claim 16,
**characterised** in that the shaping element (158) consists of an electrically conducting material, in which the electrically conducting material is provided with an electrically insulating coat.

21. Casting tool according to claim 16 or 18,
**characterised** in that a resistance heating element is arranged in the cross-section of the shaping element (166).

22. Casting tool according to one of the claims 1 to 21,
**characterised** in that the totality of the shaping elements is surrounded on the outside by a rigid housing as supporting element (46, 181, 188, 193) or supported by a rigid housing on the inside.

23. Casting tool according to claim 22,
**characterised** in that the rigid housing (46, 181, 188, 193) has a cylindrical cross-section.

24. Casting tool according to claim 23,
**characterised** in that the rigid housing having (181, 193) having the cylindrical cross-section is constructed from rings.

25. Casting tool according to one of the claims 1 to 21,
**characterised** in that the supporting elements (9, 73, 101, 199, 206) of the shaping elements consist of bells comprising of two halves.

26. Casting tool according to claim 24 to 25,
**characterised** in that the mutually adapted connecting parts (10, 74, 75, 103, 104, 182, 202, 203) of the supporting elements are profiled grooves.

27. Casting tool according to claim 24 or 25,
**characterised** in that the mutually adapted connecting parts (207, 203) of the supporting elements are mortised hollow spaces.

28. Casting tool according to one of the claims 1 to 27,
**characterised** in that it is used for the manufacture of high tension insulators which are provided with plastic screens for extending the leakage path.

## Revendications

1. Appareil de coulage, composé d'un assemblage d'éléments moulants (1, 32, 38, 44, 54, 58, 70, 79, 88, 95, 105, 112, 120, 126, 134, 141, 148, 158, 166, 189, 194, 205, 212, 213) disposés en rangée, les éléments moulants étant pourvus de surfaces se raccordant les unes aux autres, la rangée des éléments moulants formant un seul espace creux intérieur (3) fermé, et pourvus, à au moins une de leurs extrémités, d'un élément obturateur (5, 6) fermant l'espace creux intérieur (3), où, en plus de l'espace intérieur (3), est réalisée, en face inférieure de l'outil de coulage, une tubulure de raccordement (7) destinée à l'amenée du matériau à couler, tandis que, du côté opposé, est réalisée une ouverture et où les éléments moulants sont composés au moins partiellement d'un matériau élastique, caractérisé en ce que sont prévus des éléments d'appui (9, 46, 73, 101, 181, 188, 193, 198, 206) formant des éléments d'espacement et entourant extérieurement les éléments moulants élastiques (1, 32, 38, 44, 54, 58, 70, 79, 88, 95, 105, 112, 120, 126, 134, 141, 148, 158, 166, 189, 194, 205, 212, 213) et pourvus des partes de raccordement (10, 74, 75, 103, 104, 182, 202, 203, 207, 208) adaptées les unes aux autres.

2. Appareil de coulage selon la revendication 1, caractérisé en ce que l'élément moulant (1, 32, 38, 44, 54, 58, 70, 79, 88, 95, 105, 112, 120, 126, 134, 141, 148, 158, 166, 189, 194, 205, 213) est composé d'un profilé se refermant sur lui-même.

3. Appareil de coulage selon la revendication 2, caractérisé en ce que le profilé se refermant sur lui-même (1, 38, 44, 54, 58, 70, 79, 88, 95, 105, 112, 120, 126, 134, 141, 148, 158, 166, 189, 194, 205) est de forme annulaire.

4. Appareil de coulage selon la revendication 2 ou 3, caractérisé en ce que le profilé se refermant sur lui-même (44, 70) est continu.

5. Appareil de coulage selon la revendication 2 ou 3, caractérisé en ce que le profilé se refermant sur lui-même (1, 32, 38, 54, 58, 79, 88, 95, 105, 112, 120, 126, 134, 141, 148, 158, 166, 189, 194, 205, 213) est fendu en au moins un endroit.

6. Appareil de coulage selon la revendication 2 ou 3, caractérisé en ce que le profilé se refermant sur lui-même (58) est réalisé à partir d'un profilé droit, par cintrage à la forme.

7. Appareil de coulage selon la revendication 1, caractérisé en ce que l'élément moulant élastique (64) est réalisé à partir d'un profilé rectiligne enroulé en spirale.

8. Appareil de coulage selon l'une des revendications 1 à 3, caractérisé en ce que l'élément moulant élastique (213) est réalisé au moyen d'une combinaison de segments de profilés annulaire et de pièces profilés rectilignes.

9. Appareil de coulage selon la revendication 4, caractérisé en ce que le profilé continu se refermant sur lui-même (70) est à paroi mince.

10. Appareil de coulage selon l'une des revendications 2 à 8, caractérisé en ce que le profilé (1, 32, 38, 44, 54, 58, 79, 88, 95, 105, 112, 120, 126, 134, 141, 148, 158, 166, 189, 194, 205, 212, 213) est à paroi épaisse.

11. Appareil de coulage selon la revendication 10, caractérisé en ce que le profilé à paroi épaisse (1, 32, 38, 44, 54, 58, 79, 88, 120, 126, 134, 141, 148, 158, 189, 194, 205, 212, 213) est étanche (massif).

12. Appareil de coulage selon la revendication 10, caractérisé en ce que le profilé à paroi épaisse (95, 105, 112, 166) contient un espace creux.

13. Appareil de coulage selon la revendication 12, caractérisé en ce que l'espace creux du profilé (105) est un espace creux fermé.

14. Appareil de coulage selon la revendication 13, caractérisé en ce que l'espace creux fermé (112) est pourvu d'au moins un raccordement tubulaire à l'espace extérieur.

15. Appareil de coulage selon l'une des revendications 1 à 14, caractérisé en ce que l'élément moulant (1, 32, 38, 44, 54, 58, 70, 79, 88, 95, 105, 112, 120, 189, 194, 205, 212, 213) est composé d'un matériau unique.

16. Appareil de coulage selon l'une des revendications 1 à 14, caractérisé en ce que l'élément moulant (126, 134, 141, 148, 158, 166) est composé d'au moins deux matériaux différents.

17. Appareil de coulage selon la revendication 16, caractérisé en ce que l'élément moulant (126, 134) présente un noyau intérieur flexible.

18. Appareil de coulage selon la revendication 16, caractérisé en ce qu'un revêtement résistant, assurant la séparation du moule, est réalisé sur la surface de l'élément moulant (141).

19. Appareil de coulage selon la revendication 16, caractérisé en ce que l'élément moulant (148) est composé en un matériau isolant de l'électricité, le matériau isolant de l'électricité étant pourvu d'un revêtement conducteur de l'électricité.

20. Appareil de coulage selon la revendication 16, caractérisé en ce que l'élément moulant (158) est composé en un matériau conducteur de l'électricité, le matériau conducteur de l'électricité étant pourvu d'un revêtement isolant de l'électricité.

21. Appareil de coulage selon la revendication 16 ou 18, caractérisé en ce que, dans la section transversale de l'élément moulant (166), est disposé un insert en fil métallique chauffant à résistance.

22. Appareil de coulage selon l'une des revendications 1 à 21, caractérisé en ce que l'ensemble des éléments moulants est entouré extérieurement, à titre d'éléments d'appui (46, 181, 188, 193) par un carter rigide ou est soutenu intérieurement par un carter rigide.

23. Appareil de coulage selon la revendication 22, caractérisé en ce que le carter rigide (46, 181, 188, 193) présente une section transversale cylindrique.

24. Appareil de coulage selon la revendication 23, caractérisé en ce que le carter rigide (181, 193) présentant une section transversale cylindrique est formé d'anneaux.

25. Appareil de coulage selon l'une des revendications 1 à 21, caractérisé en ce que les éléments d'appui (9, 73, 101, 198, 206) des éléments moulants sont composés de coquilles réalisées en deux moitiés.

26. Appareil de coulage selon la revendication 24 ou 25, caractérisé en ce que les parties de raccordement (10, 74, 75, 103, 104, 182, 202, 203), adaptées entre elles, des éléments d'appui sont des gorges profilées.

27. Appareil de coulage selon la revendication 24 ou 25, caractérisé en ce que les parties de raccordement (207, 208), adaptées entre elles, des éléments d'appui sont des espaces creux assemblés à tenon et mortaise.

28. Appareil de coulage selon l'une des revendications 1 à 27, caractérisé en ce qu'il sert à la fabrication d'isolateurs haute tension, pourvus d'écrans de blindage en matière synthétique destinés à allonger les lignes de fuite.
